# EUROPEAN PATENT SPECIFICATION

(11) **EP 2 601 829 B1**
(45) Date of publication and mention of the grant of the patent: **24.06.2015**
(21) Application number: 12195370.7
(22) Date of filing: 04.12.2012
(51) Int. Cl.: A01G 13/02

(54) **A method to seal land with an air tight covering and a machine suitable for applying the method**
Verfahren zum Versiegeln von Land mit einer luftdichten Abdeckung und Maschine, die sich zur Anwendung des Verfahrens eignet
Procédé de zone d'étanchéité avec couverture hermétique et machine adaptée à l'application du procédé

(30) Priority: 05.12.2011 EP 11192024
(43) Date of publication of application: 12.06.2013
(73) Proprietor: Seelen, Wilhelmus Johannes Peter, 5993 NH Maasbree (NL)
(72) Inventor: Seelen, Wilhelmus Johannes Peter, 5993 NH Maasbree (NL)
(74) Representative: Janssen, Paulus J. P.

(56) References cited:
- WO-A1-2009/144018
- AU-A- 5 042 885
- DE-A1-102009 036 912

## Description

The present invention concerns a method to seal land between an upstream end and a downstream end thereof with an air tight covering comprising multiple sheets that extend in parallel over the land, the sheets being welded together adjacent their lateral edges. The invention also pertains to an agricultural machine that is suitable to perform the said method.

### Background art

In the art, sealing land with an air tight covering is used for various purposes, i.a. for weed preventing and soil resetting, the latter also known as biological soil disinfection or bio fumigation. Weed preventing by an air tight covering of the land is simply based on removing air needed for the weed to grow. Soil resetting is based on the principle of applying organic matter to the soil and allowing it to ferment. The gases produced during the anaerobic fermentation process kill many soil borne pathogens. Typical microorganisms aimed at are fungi such as *Verticillium dahliae, Fusarium oxysporum* and *Rhizoctonia solani,* and various nematodes such as *Pratylenchus penetrans*. Soil resetting has become more popular since many vegetable farms specialise in a limited number of crops, making crop rotation virtually impossible. As is commonly know, the resulting monocultures are very vulnerable to soil borne pathogens such as fungi, nematodes, insects etc. Solutions such as treatment with chemicals or steam sterilization are known but all have their typical disadvantages.

From JP 2004033032 (assigned to Meishin Denki KK) a method to seal land with an air tight covering is known wherein multiple sheets that extend in parallel (i.e. the sheets extend substantially in the same direction) over the land are glued together at overlapping edges. In order to secure the sheets to the land fixing tools are driven into fixing holes present in the sheets. A disadvantage of this method is that it is relatively time and labour consuming to cover a piece of land completely and also, that numerous holes are present to which air can flow through the coverage. Also, there is a considerable risk of the foil tearing due to the presence of the fixing tools. An alternative method is known wherein very heavy, more or less stiff plastic is used that does not need to be fixed at numerous sites along its edges. Such plastic however is hard to handle and expensive. Also a method is known wherein a thin plastic foil is used, like a foil as described in the above mentioned Japanese patent application, for example Hytibarrier foil (available from Hyplast, Hoogstraten, Belgium) or Orgasun and Orgafum foil (available from Plastika Kritis, Iraklion, Crete, Greece), wherein the edges of the foil are covered with soil originating from the land to be reset. This soil has the function of keeping the thin foil where it is during the time needed for weed prevention or soil resetting. An important disadvantage however is that the soil on top of the foil is not subjected to the treatment and thus, that the contamination with the soil borne pathogens remains, although to a lesser extent. A mean to prevent this is to use soil from a remote piece of land that is free from these pathogens. However, this means that soil has to be tested beforehand on the presence of pathogens and also, that clean soil has to be transported from one piece of land to another. For these reasons, a method is often used wherein heavy objects such as worn tires are used to cover the edges of the sheets at regular distances. This however also means that the method is labour intensive.

Another method for sealing land is known from DE102009036912 A1.

### Summary of the invention

It is an object of the present invention to overcome or at least mitigate the disadvantages of the prior art methods, to this end a method according to the preamble has been devised, wherein the method comprises positioning a first sheet at the upstream end of the land, creating a slot extending from the sheet adjacent a lateral edge thereof towards the downstream end of the land, unwinding the first sheet towards the downstream end of the land, such that a part of the first sheet adjacent its lateral edge at least partly covers the slot, placing the said part of the first sheet at least partly into the slot, filling the slot with soil, and after the first sheet has been unwound at least partly towards the downstream end of the land, unwinding a second sheet in parallel to the first sheet such that a first lateral edge of the second sheet is in parallel to the lateral edge of the first sheet and the second sheet overlaps the soil present in the slot, welding the first and second sheet adjacent their lateral edges and optionally repeating these steps with n following sheets, n being a natural number, until the land is covered.

This way, in addition to the land beneath the first and second sheet, the soil used to secure the sheet to the land is provided with an air tight covering. In the method, a first sheet is secured to the land by mechanically connecting part of this sheet along its edge at least partly into a slot created in the land. The next sheet is welded to the first sheet, thereby inherently also being secured to the land. Since in the present method the soil used for filling the slot (filling in the sense of the invention also means partly filling) will be covered by the next sheet, this soil will also be covered from access by the open air. The present method is simple to automate since common tools can be used for securing a sheet while unwinding it from a package, for example a plough, shovel and wheel or alike, and also, common tools can be used for welding sheets, for example by spraying glue, applying tape, using self-adhesive sheets etc. Such tools can easily be installed in one machine or a combination of machines to enable a method wherein a sheet is unwound and secured to the land needing no more than the soil of the land present, and at the same time making sure that also the said soil that is used for securing the sheets to the land is shielded from the open air.

The present method is not restricted to particular ways to create the slot in the land. For example, a plough may be used to carve a slot in the land, but also a pressing wheel or alike may be used to locally compress land to thereby form a slot therein. It is also noted that various steps in the present method may be performed in one go by using one means that performs both steps at the same time. For example, the placing of the sheet in the slot and filling of this slot with soil may be performed in one step by shovelling soil on top of a sheet that at least partly overlaps the slot, whereby the sheet is more or less pressed into the slot by gravitational forces working on the soil. Also, the creating of the slot and the placing of the sheet into this slot may be created in one go. For example, a pressing wheel may be used that runs over the lateral edge of the sheet and presses the sheet into a newly created slot in the land. It is also noted that for a method according to the present invention, the steps need not be performed in the same order as described in the summary here above. For example, a slot may be created only after the sheet has been unwound from the package. In this embodiment the sheet may for example be unwound, where after a slot is created next to the sheet (optionally partly or wholly beneath the sheet) and the corresponding soil is put on top of the sheet adjacent the lateral edge. This way the sheet at the edge may more or less automatically sink into the slot (which is a form of placing the sheet into the slot according to the invention), or otherwise, be forced in the slot or a newly created slot by pressing the soil put on top of the sheet towards the land. In the latter embodiment, the slot at the site where the sheet is placed into it, need not be more than a shallow dimple in the land to create sufficient mechanical connection of the sheet with the land. Other ways of performing the various steps, either separately or combined or in yet another order, may be used to arrive at the method according to the invention.

It is also noted that the present method may be combined with the use of chemicals to improve the characteristics of the land. For example, certain chemicals that kill pathogens perform significantly better in an anaerobic environment (i.e. an environment substantially below normal oxygen level). Combination of the use of chemicals with the present method might thus lead to a reduced use of the chemical per square meter of land while still keeping the pathogen killing performance to an adequate level. The present method may also be used together with operations before or after the present method is or has been applied. For example, for some types of land, for example depending on the type of soil, a pre-operation might be advantageous, for example to straighten the land before the sheets are provided to cover the land.

The present invention also pertains to an agricultural machine suitable for performing a method as described here above, the machine having an operative width extending between a first and second end, the operative width corresponding to the width of a sheet, the machine comprising a carrier for carrying the sheet being present in a package, means to unwind the sheet from the package and feed the sheet to cover the land, at the first end of the machine, means for creating a slot in the land, and means to shovel soil on top of the sheet into the slot (thus inherently the sheet is forced into the slot), and optionally upstream of the said means to shovel soil a pressing element to press the soil shovelled on top of the sheet into the slot(which pressing element may for example be a wheel or other type of roller, a ball etc.), and at the first or second end of the machine, welding means for connecting the sheet to another sheet.

The present invention also pertains to a combination of a first and second machine, which combination of machines is suitable for performing a method according to the invention, wherein the first machine has an operative width extending between a first and second end, the operative width corresponding to the width of a first sheet, the first machine comprising a carrier for carrying the first sheet being present in a package, means to unwind the first sheet from the package and feed the first sheet to cover the land, and at its first and second end, means for creating a slot in the land, means to shovel soil on top of the sheet into the slot, and optionally upstream of the said means to shovel soil a pressing element to press the soil shovelled on top of the sheet into the slot, and the second machine has an operative width extending between a first and second end, the operative width corresponding to the width of a second sheet, the first machine comprising a carrier for carrying the second sheet being present in a package, means to unwind the second sheet from the package and feed the second sheet to cover the land, and at its first and second end, welding means for connecting the first sheet to the second sheet. Since the two principal operations needed to perform a method according to the invention are quite different from a mechanical point of view, applicant recognised that it may be advantageous to use a first dedicated machine for the first type of operation, *viz*. working an edge of the sheet into the ground to mechanically connect the sheet to the land, and a second dedicated machine for the second type of operation, *viz*. welding sheets to interconnect the sheets to provide an air tight covering.

### Definitions

*A sheet*: a broad, thin, usually rectangular mass or piece of material, such as for example paper, plastic, metal, glass, plywood etc. A sheet may be comprised of multiple separate (sub-)sheets joined at a seam, for example by welding.

*Adjacent a lateral edge of a sheet*: near the edge of the sheet, for example at a location between the middle of the sheet and the actual edge, or at a small distance away from the sheet.

*A sheet in a package*: a 3D constitution of a 2D sheet that is packed, for example by wounding or folding, to become three dimensional. Typically the package is a roll, wherein the sheet is wound on a core.

*Unwinding*: to release from a package in a single layer, typically by unwinding a sheet from a roll (the sheet being wound on a core), or from a package wherein the sheet is folded or in any other way packed to become a 3D constitution.

*An air tight covering*: a covering that substantially prevents open air (wind) to pass through. Small holes may however be present due to bird bites, sharp objects being present on the land, small damages etc. Also, the gases in the air may pass through the covering at a molecular level by diffusion even if there are no small holes present at all.

*Land*: an agricultural or farming area, which area may be part of a larger area. Therefore the term "land" does not necessarily mean that the land has clear borders around its circumference, in particular n upstream end and a downstream end of the land need not coincide with clear borders such as a fence, hedge, wall, water etc.

*Welding*: to bring into union to arrive at a substantially air-tight connection, for example by applying heat and/or using an additional material such as a glue or adhesive tape, in each case optionally in combination with pressure.

*A plough*: an implement that can be used in breaking up land.

*A shovel*: a tool for moving material, typically a tool with a broad scoop or blade, but alternatively the shovel may comprise as an operative head for example a worm wheel, bristle, blower etc.

### Embodiments of the invention

In a first embodiment of the method according to the invention the second sheet during its unwinding at its second lateral edge is mechanically connected to the land by creating a second slot parallel to the first sheet, the second slot being positioned adjacent the second lateral edge of the second sheet, between the said first and second lateral edge, such that during unwinding a part of the second sheet adjacent its second lateral edge at least partly covers the second slot, placing the said part of the second sheet at least partly into the second slot, and filling the second slot with soil. In this embodiment each sheet is secured to the land at one edge and overlaps a contiguous sheet at the other edge and being welded thereto at that other edge. This leads to a "roof-tile" like result providing a firm mechanical connection to the land while at the same time may be performed by one single machine.

In an embodiment the soil is pressed into the slot after it has been shovelled into this slot. By pressing the soil into the slot an improved securing takes place since soil simply shovelled into a slot has a very open structure. By pressing the soil the sheet gets very tightly secured which is particularly advantageous when hard winds blow over the covered land. Such winds may be able to release sheet that is secured in a slot of which the soil is not actually pressed after the slot is filled with soil. Indeed, this may depend also on the depth of the slot, the nature of the soil, and various other factors.

In another embodiment adjacent sheets are unwound in opposite directions. This has the advantage that a piece of land can be covered in less time.

In another embodiment the welding takes place by applying a glue that unites the lateral edges of the sheets. The type of glue is not critical, as long as the lateral edges of the sheets can be glued together to be united to become air tight. The glue can be applied as a layer, in the form of multiple dots, as a continuous line, as a mist of droplets etc. The way of applying the glue should be adopted to the type of glue (either water based, solvent base, solvent-less, hot melt, two-component, its viscosity, its drying time etc.) It is best to follow manufacturer's instructions. Suitable glues can be obtained from Fourny, Willebroek, Belgium.

In yet another embodiment, a glue is applied to a sheet before the next adjacent sheet is unwound. In this embodiment a layer of glue is subjected to a significant period of time to pre-dry before the next sheet is brought in contact with the glue. This provides an opportunity for most solvent to leave the glue. The effect is that the contacted sheet is almost instantaneously fixated to the previous sheet and that there is less risk of glued sheets to detach.

In an embodiment, a glue is applied during unwinding the sheet to be glued. In this embodiment, right before a sheet is unwound to be glued to the previous sheet glue is applied. This glue can for example be applied to the sheet that is being unwound, to the previous sheet, or to both. The advantage of this embodiment is that dust, other particulate material (like sand, leaves), insects, water drops (when its raining etc.) can hardly impact the gluing capacity since the glue is applied and used to bind two sheet surfaces immediately afterwards. This embodiment may be combined with the embodiment wherein a glue is applied before a next adjacent sheet is unwound, in particular to make sure sufficient clean glue is present in the contact area between the sheets. Alternatively, the glue applied right after unwinding a next sheet is the only glue present to bind the two sheets together.

In an embodiment the sheet used is a plastic sheet. Plastic has the advantages of being relatively inexpensive, being easy to handle, may have a good tear resistance and resistance to UV radiation while at the same time being substantially air tight. Preferably, the sheet comprises multi layers of plastic. The presence of multi layers provides the opportunity that the required properties of the plastic sheet (tear resistant, air tight, UV resistant etc.) need not be present in one and the same plastic material. For example, in a three layer constitution, the upper layer can be composed of a material that substantially blocks UV radiation, the middle layer can be composed of an air tight plastic, and the lower layer can be composed of a material that provides excellent tear resistance. In a further embodiment, the plastic is biodegradable. This may have the advantage that the sheet material need not be removed from the land but is for example ploughed in and left to decompose.

In another embodiment the glue used is substantially free of solvent. This has the advantage that drying of the glue is no issue when gluing the sheets together. Drying times may be long when the sheet material is substantially air tight. Air tight often also means "solvent molecule" tight or at least the sheets are hard to permeate by the solvent molecules. Long drying times are in particular a problem when for example a hard wind is blowing while the land is being covered. An adequate type of solvent free glue is a hot melt glue. Surprisingly, such a glue gives substantially more freedom to apply the method under circumstances of moist (rain) and dust (due to wind blowing over the land). Applicant found that even substantial moist and dust on top of a layer of hot melt glue applied to a sheet does not substantially influence the welding properties of the glue.

In a particularly preferred embodiment a machine is used that has an operative width extending between a first machine end and a second machine end, the operative width being substantially the same as the width of the sheet, which machine carries the sheet wound as a continuous lane on a core and has means to unwind the sheet from the core to cover the land, the machine at its first or second end has means for automatically welding overlapping sheets, the machine at its second end automatically performing the steps of creating the slot, placing a lateral edge of a sheet into the slot, filling the slot with soil and optionally pressing the soil into the slot, leading to anchoring the sheet in the land. It has been proven that with such a machine, a large part of the covering labour can be automated while at the same time reaching a perfect or at least near perfect air tight covering of the land. The welding may take place by applying heat by contact heating, radiation, ultrasonic waves etc., but may also takes place by using an intermediate material such as a glue (optionally a two-component glue wherein for example each component is applied to a different sheet such that reaction only takes place upon contact of the sheets).

In a further embodiment a machine is used that at both its first and second end has means for 1) welding, 2) means for creating the slot, 3) means for pressing a lateral edge of a sheet into the slot, 4) means for filling the slot with soil and 5) optional means for pressing the soil into the slot. This machine has the advantage that at both its ends all needed process steps can be performed. This means that the machine can be used to dig in the first sheet at both sides, thereby obviating the necessity to secure the first sheet at both its lateral edges, and also that the machine can be used in both upstream and downstream directions for unwinding sheets and covering the land with this sheets at the same time. It is noted that the means corresponding to the steps numbered 1) through 5) do not necessarily have to be separate means. It may be that a means is used, as indicated above, capable of performing two or more of the steps in one go.

The machine according to the invention in an embodiment wherein the means for creating a slot comprise a plough to dig the slot, is provided with a means positioned upstream of the plough to force a part of the sheet into the slot (which means may for example be a wheel, or a static U-turn profile, a static or rolling ball etc.), and the means to shovel soil on top of the sheet comprise a shovel positioned upstream of the means to force a part of the sheet into the slot.
In an embodiment the machine has a restraining element adjacent the shovel to enable minimizing the amount of soil being thrown on top of the sheet when shovelling soil into the slot. This provides the advantage that the area which is meant for welding the sheets together is not or hardly fouled with soil which would otherwise negatively impact the welding performance.

In an embodiment the machine has at both its ends a plough to dig a slot in the land, and upstream of the plough an element to force a part of the sheet unwound from the package into the slot, and upstream from this element, a shovel to shovel soil into the slot on top of the sheet, and upstream of the shovel an optional pressing element to press the soil shovelled into the slot, and welding means for connecting the edge of the sheet to another sheet. This machine has the advantage that at both its ends all needed process steps can be performed. This means that the machine can be used to dig in the first sheet at both sides, thereby obviating the necessity to secure the first sheet at both its lateral edges, and also that the machine can be used in both upstream and downstream directions for unwinding sheets and covering the land with this sheet at the same time.

In an embodiment the welding means comprises means to apply glue to a lateral edge of a sheet (for example a glue gun, a spray head, a simply nozzle, a bristle etc). In a further embodiment the machine has means for applying glue to both a sheet already covering the land and a sheet after it is unwound from the package but before it covers the land. A machine according to this embodiment is very flexible towards the type of glue being used. For a solvent rich glue it might be advantageous to apply a layer of glue to a sheet that is unwound such that the solvent has time to evaporate. For a solvent less or solvent free glue it might be advantageous to apply the glue to the previous sheet just before the sheet to be glued (the next sheet) is unwound, or alternatively, apply the glue right after the sheet to be unwound is actually unwound and applied to the land, partly overlapping the previous sheet.

In yet another embodiment the package is located at an upstream end of the machine, at a height corresponding to an average adult human pelvic level, the machine comprising rollers to guide a sheet unwound from the package to a position adjacent the land. This embodiment has the advantage that a new package can be relatively easy be positioned in an operative position in the machine. A new package could be lifted for example by two operators which place the package at their pelvic level in the machine. Preferably, the new package is already present in the machine, for example lying somewhat upstream of the ultimate operative position of the package (i.e. the position of the package when being actually used to unwind a sheet therefrom to cover the land).

### Brief description of the drawings

Figure 1 schematically shows a side view of an agricultural machine for performing the invention.
Figure 2 schematically shows a rear view of the agricultural machine of figure 1.
Figure 3 schematically shows the result of a sheet being processed according to the present invention.

### Figure 1

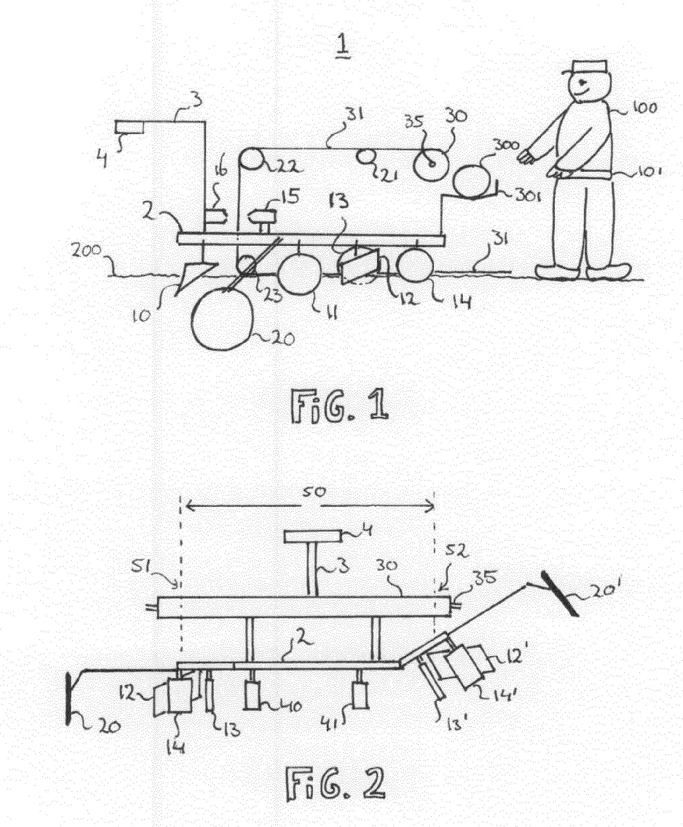

Figure 1 schematically shows a side view of an agricultural machine 1 for performing the invention. The machine comprises a frame 2 to which various means for performing the method according to the invention are operatively connected. The machine 1 is provided with connecting rod 3, extending to connecting means 4 for connecting the machine to a standard agricultural tractor (not shown), such as a Massey Ferguson 7600 series. To the frame is connected at the most downstream position a plough 10, meant to dig a slot in the land. In the working space of the plough 10, this plough is followed by a wheel 11, which wheel is positioned such that it will "walk" through the slot dug in the land (meant for pressing a sheet into the slot). Wheel 11 on its turn is followed by a shovel 12 which will shovel soil that is thrown on the land by plough 10, into the slot. In order to make sure that as much soil as possible is actually shovelled on top of the slot, a restraining member 13 (in this case a simple flat wheel) is placed adjacent the opposing side of the (virtual) slot to run in conjunction with the shovel 12. Lastly, in this embodiment shovel 12 is followed by a wheel 14 that pressed soil shovelled on top of the slot actually into the slot in order to prevent substantial dykes to be formed in the land and to improve the securing of the sheet into the slot.

The machine is provided with to glue guns 15 and 16, which can spray a layer of glue on the respective sides of a sheet 31 which is unwound from roll 30, which rolled is in hanging engagement with carrier bar 35, and guided over rollers 21, 22 and 23 to be covered over the land 200. The machine has a spare roll 300, which roll has the same type of sheet wound on a core (not shown), and is place in a spare roll holder 301. This roll 301, as well as roll 30, is substantially positioned at the normal pelvic height 101 of a normal adult 100 in order to facilitate the manual change of the rolls during operation of the machine 1. Immediately after roll 30 is empty, *viz.* all sheet material has been unwound from the roll, the remaining core is removed from the machine and roll 300 is placed at the position where roll 30 was before. The downstream end of the sheet wound on roll 300 is released from the roll and connected to the upstream end of the sheet that was originally wound on roll 30. Typically this connection takes place by gluing the two sheet ends together. After the connection is confirmed to be suitable for operation of the machine, roll 300 can be used to unwind sheet material therefrom to cover the land.

### Figure 2

Figure 2 schematically shows a rear view of the agricultural machine of figure 1 (not all features are present in this schematic rear view). The machine has an operating width 50, which extends between a first end 51 of the machine and a second end 52. In this view it can seen that wheel 20 extends from a first lateral end of machine 1. This wheel may serve as a beacon for the driver of the tractor (not shown) to make sure he keeps a proper distance from a previous sheet. It can be seen in this view that at both lateral ends of the operating width of the machine, the means are present for ploughing a slot, pressing a sheet into the slot, shovelling soil into the slot (12, 12', 13, 13'), and pressing the soil into the slot with a wheel (14, 14'). Also, the machine is provided with centre wheels 40 and 41 to keep the machine in a stable position when one of the ends of the machine is folded away from the land, as depicted in figure 2 with the means indicated with an apostrophe (12', 13', 14' and 20'). In this configuration, only at one end a sheet is actually ploughed into the land, which is the normal way of operation for any sheet being unwound next to a sheet already covering the land.

In another embodiment (not shown), the working means on either side can be tilted away with the pressing wheel 14 (14') remaining in contact with the ground surface. This way, the pressing wheel can be used to roll over the glued area in order to establish an even more firm contact between the sheets.

### Figure 3

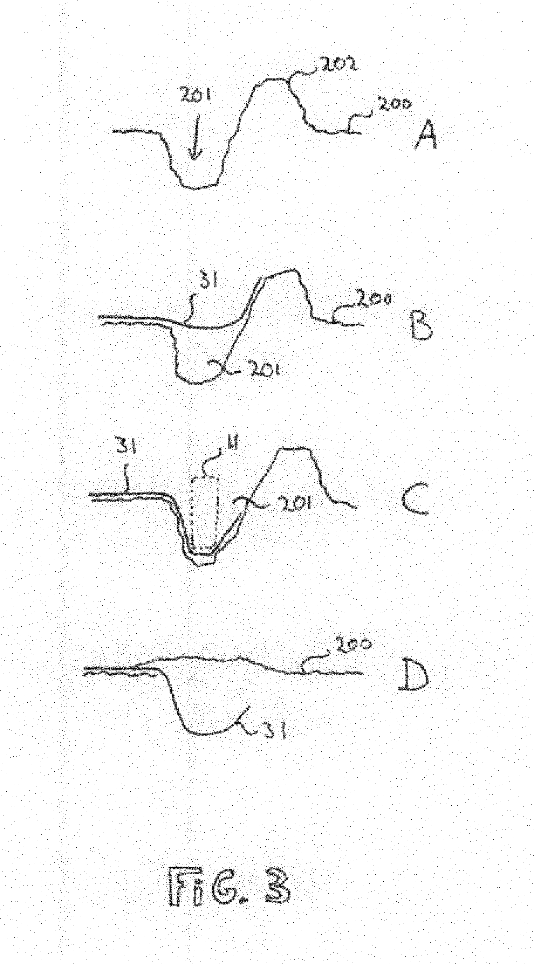

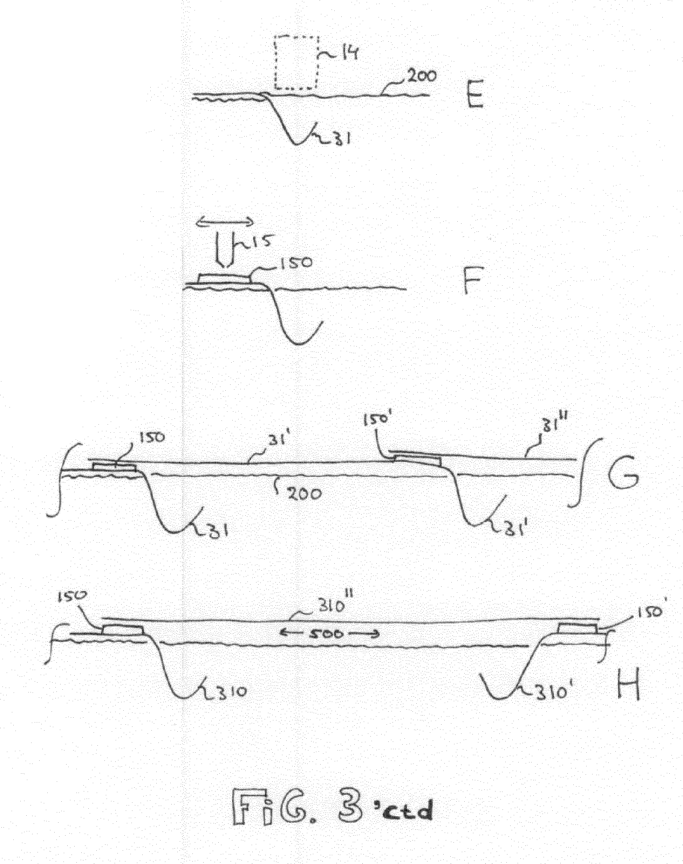

Figure 3 schematically shows the result of a sheet being processed according to the present invention. In figure 3A, the result of the plough (not shown) digging a slot 201 into the land is depicted. On top of surface 200, a heap of soil 202 is created. In figure 3B, it is shown that a sheet 31 is unwound to cover the land (surface 200), including slot 201. Figure 3C shows that a wheel 11 (which is shown in dotted lines) which runs through the slot pressed the sheet 31 into the slot. In a next step, the heap of soil 202 is shovelled into the slot 201 which results in a situation as depicted in figure 3D. The sheet 31 is now buried in the slot 201 and thus secured into the land. Thereafter, the loose soil lying on top of the buried sheet is pressed with a wheel 14, as shown in dotted lines in figure 3E, to flatten surface 200 and to even more firmly secure the sheet 31 in the land. At the same time, a layer of glue 150 (Vitagra glue, available from Fourny, Willebroek, Belgium) is applied to the sheet adjacent the position where the sheet is dug in, with gluing gun 15 which oscillates as indicated in figure 3F. Then, a next sheet 31' is connected to sheet 31 by overlapping the next sheet at least to an area where sheet 31 is provided with the layer of glue 150. At the opposite side, the next sheet 31' is processed according to the steps indicated in figures 3A to 3F. Then, yet another sheet 31" is connected to sheet 31' in a corresponding way, as indicated in figure 3G.

In figure 3H an alternative constitution of sheets is depicted in which a first sheet 310 and third sheet 310' are on both of their respective lateral edges (one edge is shown of each sheet only) worked into the ground, using a first machine that at both its ends works the lateral edges of sheets into the ground. A space 500 sufficient for riding between the sheets 310 and 310' with a tractor is left uncovered. Then, a second machine is used that sprays glue 150 and 150' on the first and third sheets and after that, unwinds a second sheet 310" to be welded adjacent its lateral edges to the first and third sheet while at the same time covering the soil used to fill the slots that secure the first and third sheet to the land. In yet another alternative embodiment that is in line with the embodiment as shown in figure 3H, the first and third sheets are positioned (nearly) contiguous, and the space between them, including the soil covering both respective slots, is covered by a second sheet of small width, but sufficiently wide to at least partly overlap the first and third sheet to be welded thereto and thus at the same time covering the soil in the two neighbouring slots. This second sheet could for example be a self-adhesive ribbon-like sheet.

In any of these ways, a piece of land can be completely covered with the sheets to obtain a covering which is firmly secured to the land and is substantially air tight. Using the present method and machine, 2½ acres of land (about 10.000 square meters) can be covered in about 2 hours, needing one man to drive the tractor, and one optional man to oversee the machine and possibly help with loading a new roll of sheet material.

## Claims

1. A method to seal land (200) between an upstream end and a downstream end thereof, with an air tight covering comprising multiple sheets (31, 31', 31 ", 310, 310', 310") that extend in parallel over the land, the sheets being welded together adjacent their lateral edges, the method **characterised in that** it comprises:
- positioning a first sheet (31, 310) at the upstream end of the land,
- creating a slot (201) extending from the sheet adjacent a lateral edge thereof towards the downstream end of the land,
- unwinding the first sheet towards the downstream end of the land, such that a part of the first sheet adjacent its lateral edge at least partly covers the slot,
- placing the said part of the first sheet at least partly into the slot,
- filling the slot with soil (202),
- and after the first sheet has been unwound at least partly towards the downstream end of the land, unwinding a second sheet (31', 310") in parallel to the first sheet such that a first lateral edge of the second sheet is in parallel to the lateral edge of the first sheet and the second sheet overlaps the soil present in the slot, welding the first and second sheet adjacent their lateral edges, and
- optionally repeating these steps with n following sheets, n being a natural number, until the land is covered.

2. A method according to claim 1, **characterised in that** the second sheet during its unwinding at its second lateral edge is mechanically connected to the land by:
- creating a second slot parallel to the first sheet, the second slot being positioned adjacent the second lateral edge of the second sheet, between the said first and second lateral edge, such that during unwinding a part of the second sheet adjacent its second lateral edge at least partly covers the second slot,
- placing the said part of the second sheet at least partly into the second slot, and
- filling the second slot with soil.

3. A method according to claim 1 or 2, **characterised in that** after a slot is filled with soil, the soil is pressed into the slot.

4. A method according to any of the preceding claims, **characterised in that** the welding takes place by applying a glue (150, 150') that unites the lateral edges of the sheets.

5. A method according to claim 4, **characterised in that** a glue is applied to a sheet before the next adjacent sheet is unwound.

6. A method according to claim 4 or 5, **characterised in that** a glue is applied during unwinding the sheet to be glued.

7. A method according to any of the preceding claims, **characterised in that** the sheet used is a plastic sheet, optionally comprising multi layers of plastic.

8. A method according to any of the claims 4 to 7, **characterised in that** the glue used is substantially free of solvent.

9. A method according to any of the preceding claims, **characterised in that** a machine (1) is used that has an operative width (50) extending between a first machine end (51) and a second machine end (52), the operative width being substantially the same as the width of the sheet (31), which machine carries the sheet wound as a continuous lane on a core (35) and has means to unwind the sheet from the core to cover the land, the machine at its first or second end has means (15,16) for automatically welding overlapping sheets, the machine at its second end automatically performing the steps of creating the slot, placing a lateral edge of a sheet into the slot, filling the slot with soil and optionally pressing the soil into the slot.

10. A method according to claim 9, **characterised in that** a machine is used that at both its first and second end has means for 1) welding, 2) means for creating the slot, 3) means for pressing a lateral edge of a sheet into the slot, 4) means for filling the slot with soil and 5) optional means for pressing the soil into the slot.

11. An agricultural machine (1) suitable for performing a method according to any of the claims 1 to 10, the machine having an operative width (50) extending between a first (51) and second end (52), the operative width corresponding to the width of a sheet, the machine comprising:
- a carrier for carrying the sheet (31, 310) being present in a package (30),
- means (21, 22, 23) to unwind the sheet from the package and feed the sheet to cover the land (200),
- at the first end of the machine, means for creating a slot (201) in the land, means (12) to shovel soil (202) on top of the sheet into the slot, and optionally upstream of the said means to shovel soil a pressing element (14) to press the soil shovelled on top of the sheet into the slot, and
- at the first or second end of the machine, welding means (15,16) for connecting the sheet to another sheet.

12. A combination of a first and second machine, together being suitable for performing a method according to any of the claims 1 to 10, wherein:
- the first machine has an operative width extending between a first and second end, the operative width corresponding to the width of a first sheet, the first machine comprising a carrier for carrying the first sheet being present in a package, means to unwind the first sheet from the package and feed the first sheet to cover the land, and at its first and second end, means for creating a slot in the land, means to shovel soil on top of the sheet into the slot, and optionally upstream of the said means to shovel soil a pressing element to press the soil shovelled on top of the sheet into the slot, and
- the second machine has an operative width extending between a first and second end, the operative width corresponding to the width of a second sheet, the first machine comprising a carrier for carrying the second sheet being present in a package, means to unwind the second sheet from the package and feed the second sheet to cover the land, and at its first and second end, welding means for connecting the first sheet to the second sheet.

13. A machine according to claim 11 or the first machine according to claim 12, wherein the means for creating a slot comprise a plough (10) to dig the slot, and the machine is provided with a means (11) positioned upstream of the plough to force a part of the sheet into the slot, and the means to shovel soil on top of the sheet comprise a shovel positioned upstream of the means to force a part of the sheet into the slot.

14. A machine according to claim 13, **characterised in that** the machine has a restraining element (13) adjacent the shovel to enable minimizing the amount of soil being thrown on top of the sheet when shovelling soil on top of the sheet.

15. A machine according to any of the claims 11 to 14, **characterised in that** the welding means comprises means to apply glue (150, 150') to a lateral edge of a sheet.

## Patentansprüche

1. Verfahren zum Versiegeln einer Grundstücksfläche (200) zwischen einem oberen Ende und einem unteren Ende davon mit einer luftdichten Abdeckung, die mehrere Bahnen (31, 31', 31", 310, 310', 310") umfasst, die sich parallel über die Grundstücksfläche erstrecken, wobei die Bahnen ihren Seitenrändern benachbart verschweißt werden, wobei das Verfahren **dadurch gekennzeichnet ist, dass** es umfasst:
- Positionieren einer ersten Bahn (31, 310) an dem oberen Ende der Grundstücksfläche,
- Herstellen einer Furche (201), die sich von der Bahn einem Seitenrand davon benachbart in Richtung des unteren Endes der Grundstücksfläche erstreckt,
- Abwickeln der ersten Bahn in Richtung des unteren Endes der Grundstücksfläche, derart, dass ein Teil der ersten Bahn ihrem Seitenrand benachbart die Furche mindestens teilweise abdeckt,
- Anordnen des Teils der ersten Bahn mindestens teilweise in der Furche,
- Füllen der Furche mit Erde (202),
- und nachdem die erste Bahn mindestens teilweise in Richtung des unteren Endes der Grundstücksfläche abgewickelt wurde, Abwickeln einer zweiten Bahn (31', 310") parallel zu der ersten Bahn, derart, dass ein erster Seitenrand der zweiten Bahn parallel zu dem Seitenrand der ersten Bahn verläuft und die zweite Bahn die in der Furche vorhandene Erde überlappt, Verschweißen der ersten und der zweiten Bahn ihren Seitenrändern benachbart, und
- gegebenenfalls Wiederholen dieser Schritte mit n folgenden Bahnen bis die Grundstücksfläche abgedeckt ist, wobei n eine natürliche Zahl ist.

2. Verfahren nach Anspruch 1, **dadurch gekennzeichnet, dass** die zweite Bahn während ihres Abwickelns an ihrem zweiten Seitenrand mechanisch mit der Grundstücksfläche verbunden wird durch:
- Herstellen einer zweiten Furche parallel zu der ersten Bahn, wobei die zweite Furche dem zweiten Seitenrand der zweiten Bahn benachbart zwischen dem ersten und dem zweiten Seitenrand derart angeordnet wird, dass während des Abwickelns ein Teil der zweiten Bahn ihrem zweiten Seitenrand benachbart die zweite Furche mindestens teilweise abdeckt,
- Anordnen des Teils der zweiten Bahn mindestens teilweise in der zweiten Furche, und
- Füllen der zweiten Furche mit Erde.

3. Verfahren nach Anspruch 1 oder 2, **dadurch gekennzeichnet, dass**, nachdem eine Furche mit Erde gefüllt wurde, die Erde in die Furche gepresst wird.

4. Verfahren nach einem beliebigen der vorhergehenden Ansprüche, **dadurch gekennzeichnet, dass** das Verschweißen durch Aufbringen eines Klebers (150, 150') stattfindet, welcher die Seitenränder der Bahnen verbindet.

5. Verfahren nach Anspruch 4, **dadurch gekennzeichnet, dass** ein Kleber auf eine Bahn aufgebracht wird, ehe die nächste benachbarte Bahn abgewickelt wird.

6. Verfahren nach Anspruch 4 oder 5, **dadurch gekennzeichnet, dass** ein Kleber während des Abwickelns der zu klebenden Bahn aufgebracht wird.

7. Verfahren nach einem beliebigen der vorhergehenden Ansprüche, **dadurch gekennzeichnet, dass** die verwendete Bahn eine Kunststoffbahn ist, die gegebenenfalls mehrere Lagen aus Kunststoff umfasst.

8. Verfahren nach einem beliebigen der Ansprüche 4 bis 7, **dadurch gekennzeichnet, dass** der verwendete Kleber im Wesentlichen lösemittelfrei ist.

9. Verfahren nach einem beliebigen der vorhergehenden Ansprüche, **dadurch gekennzeichnet, dass** eine Maschine (1) verwendet wird, die eine Betriebsbreite (50) aufweist, die sich zwischen einem ersten Maschinenende (51) und einem zweiten Maschinenende (52) erstreckt, wobei die Betriebsbreite im Wesentlichen dieselbe wie die Breite der Bahn (31) ist, wobei die Maschine die Bahn als Endlosbahn auf einen Kern (35) gewickelt trägt und Mittel zum Abwickeln der Bahn von dem Kern, um die Grundstücksfläche abzudecken, aufweist, wobei die Maschine an ihrem ersten oder zweiten Ende Mittel (15, 16) zum automatischen Verschweißen sich überlappender Bahnen aufweist, wobei die Maschine an ihrem zweiten Ende automatisch die Schritte des Herstellens der Furche, des Eingebens eines Seitenrands einer Bahn in die Furche, des Füllens der Furche mit Erde und gegebenenfalls des Pressens der Erde in die Furche durchführt.

10. Verfahren nach Anspruch 9, **dadurch gekennzeichnet, dass** eine Maschine verwendet wird, die sowohl an ihrem ersten als auch an ihrem zweiten Ende 1) Mittel zum Verschweißen, 2) Mittel zum Herstellen der Furche, 3) Mittel zum Drücken eines Seitenrands in die Furche, 4) Mittel zum Füllen der Furche mit Erde und 5) gegebenenfalls Mittel zum Pressen der Erde in die Furche aufweist.

11. Landwirtschaftliche Maschine (1), die zum Durchführen eines Verfahrens nach einem beliebigen der Ansprüche 1 bis 10 geeignet ist, wobei die Maschine eine Betriebsbreite (50) aufweist, die sich zwischen einem ersten Ende (51) und einem zweiten Ende (52) erstreckt, wobei die Betriebsbreite der Breite einer Bahn entspricht, wobei die Maschine umfasst:
- einen Träger zum Tragen der Bahn (31, 310), die in einer Packung (30) vorliegt,
- Mittel (21, 22, 23) zum Abwickeln der Bahn von der Packung und zum Zuführen der Bahn, um die Grundstücksfläche (200) abzudecken,
- an dem ersten Ende der Maschine Mittel zum Herstellen einer Furche (201) in der Grundstücksfläche, Mittel (12) zum Schaufeln von Erde (202) auf die Bahn in die Furche und gegebenenfalls den Mitteln zum Schaufeln von Erde vorgelagert ein Presselement (14) zum Pressen der Erde, die auf die Bahn geschaufelt wird, in die Furche, und
- an dem ersten oder dem zweiten Ende der Maschine Schweißmittel (15, 16) zum Verbinden der Bahn mit einer anderen Bahn.

12. Kombination aus einer ersten und einer zweiten Maschine, die gemeinsam geeignet sind, um ein Verfahren nach einem beliebigen der Ansprüche 1 bis 10 auszuführen, wobei:
- die erste Maschine eine Betriebsbreite aufweist, die sich zwischen einem ersten und einem zweiten Ende erstreckt, wobei die Betriebsbreite der Breite einer ersten Bahn entspricht, wobei die erste Maschine einen Träger zum Tragen der ersten Bahn, die in einer Packung vorliegt, Mittel zum Abwickeln der ersten Bahn von der Packung und zum Zuführen der ersten Bahn, um die Grundstücksfläche abzudecken, und an ihrem ersten und ihrem zweiten Ende Mittel zum Herstellen einer Furche in der Grundstücksfläche, Mittel zum Schaufeln von Erde auf die Bahn in die Furche und gegebenenfalls den Mitteln zum Schaufeln von Erde vorgelagert ein Presselement zum Pressen der Erde, die auf die Bahn geschaufelt wird, in die Furche umfasst, und
- die zweite Maschine eine Betriebsbreite aufweist, die sich zwischen einem ersten und einem zweiten Ende erstreckt, wobei die Betriebsbreite der Breite der zweiten Bahn entspricht, wobei die zweite Maschine einen Träger zum Tragen der zweiten Bahn, die in einer Packung vorliegt, Mittel zum Abwickeln der zweiten Bahn von der Packung und zum Zuführen der zweiten Bahn, um die Grundstücksfläche abzudecken, und an ihrem ersten und ihrem zweiten Ende Schweißmittel zum Verbinden der ersten Bahn mit der zweiten Bahn umfasst.

13. Maschine nach Anspruch 11 oder die erste Maschine nach Anspruch 12, wobei die Mittel zum Herstellen einer Furche einen Pflug (10) umfassen, um die Furche zu graben, und die Maschine mit einem Mittel (11) versehen ist, das dem Pflug vorgelagert angeordnet ist, um einen Teil der Bahn in die Furche zu drücken, und die Mittel zum Schaufeln von Erde auf die Bahn eine Schaufel umfassen, die dem Mittel zum Drücken eines Teils der Bahn in die Furche vorgelagert angeordnet ist.

14. Maschine nach Anspruch 13, **dadurch gekennzeichnet, dass** die Maschine der Schaufel benachbart ein Einschränkungselement (13) aufweist, um das Minimieren der Erdmenge zu ermöglichen, die auf die Bahn geworfen wird, wenn Erde auf die Bahn geschaufelt wird.

15. Maschine nach einem beliebigen der Ansprüche 11 bis 14, **dadurch gekennzeichnet, dass** das Schweißmittel Mittel zum Aufbringen von Kleber (150, 150') auf einen Seitenrand einer Bahn umfasst.

## Revendications

1. Procédé pour combler de la terre (200) entre une extrémité en amont et une extrémité en aval de celle-ci, avec une couverture étanche à l'air comprenant des feuilles multiples (31, 31', 31", 310, 310', 310") qui s'étendent en parallèle au-dessus de la terre, les feuilles étant soudées ensemble de façon adjacente à leurs bords latéraux, le procédé étant **caractérisé en ce qu'**il comprend :
- le positionnement d'une première feuille (31, 310) sur l'extrémité en amont de la terre,
- la création d'une fente (201) s'étendant de la feuille adjacente à un bord latéral de celle-ci en direction de l'extrémité en aval de la terre,
- le déroulement de la première feuille en direction de l'extrémité en aval de la terre, de telle façon qu'une partie de la première feuille adjacente à son bord latéral couvre en partie la fente,
- le placement de la partie de la première feuille au moins partiellement dans la fente,
- le remplissage de la fente avec du sol (202),
- et après que la première feuille a été déroulée au moins partiellement en direction de l'extrémité en aval de la terre, déroulement d'une deuxième feuille (31', 310") parallèlement à la première feuille de telle façon qu'un premier bord latéral de la deuxième feuille est parallèle au bord latéral de la première feuille et que la deuxième feuille recouvre le sol présent dans la fente, soudant les première et deuxième feuilles de façon adjacente à leur bords latéraux, et
- la répétition en option de ces étapes avec n feuilles suivantes, n étant un nombre naturel, jusqu'à ce que la terre soit couverte.

2. Procédé selon la revendication 1, **caractérisé en ce que** la seconde feuille durant son déroulement sur son second bord latéral, est reliée mécaniquement à la terre par :
- la création d'une seconde fente parallèle à la première feuille, la seconde fente étant positionnée adjacente au second bord latéral de la deuxième feuille, entre les premier et deuxième bords latéraux, de telle façon que pendant le déroulement, une partie de la deuxième feuille adjacente à son second bord latéral couvre au moins partiellement la seconde fente,
- le placement de la partie de la deuxième feuille au moins partiellement dans la seconde fente, et
- le remplissage de la seconde fente avec du sol.

3. Procédé selon la revendication 1 ou 2, **caractérisé en ce qu'**après qu'une fente est remplie de sol, le sol est comprimé dans la fente.

4. Procédé selon l'une quelconque des revendications précédentes, **caractérisé en ce que** le soudage est effectué en appliquant une colle (150, 150') qui unit les bords latéraux des feuilles.

5. Procédé selon la revendication 4, **caractérisé en ce qu'**une colle est appliquée sur une feuille avant que la prochaine feuille adjacente ne soit déroulée.

6. Procédé selon la revendication 4 ou 5, **caractérisé en ce qu'**une colle est appliquée pendant le déroulement de la feuille à coller.

7. Procédé selon l'une quelconque des revendications précédentes, **caractérisé en ce que** la feuille utilisée est une feuille plastique, comprenant en option des multi-couches de plastique.

8. Procédé selon l'une quelconque des revendications 4 à 7, **caractérisé en ce que** la colle utilisée est essentiellement exempte de solvants.

9. Procédé selon l'une quelconque des revendications précédentes, **caractérisé en ce qu'**une machine (1) est employée qui présente une largeur opérationnelle (50) s'étendant entre une première extrémité de machine (51) et une seconde extrémité de machine (52), la largeur opérationnelle étant essentiellement la même que la largeur de la feuille (31), laquelle machine supporte la feuille enroulée en tant que bande continue sur un noyau (35) et présente un moyen pour dérouler la feuille du noyau pour couvrir la terre, la machine présentant sur ses première ou seconde extrémités des moyens (15, 16) pour souder automatiquement des feuilles se chevauchant, la machine effectue automatiquement sur sa seconde extrémité les étapes de création d'une fente, placement d'un bord latéral d'une feuille dans la fente, remplissage de la fente avec du sol et en option, compression du sol dans la fente.

10. Procédé selon la revendication 9, **caractérisé en ce qu'**une machine est utilisée, laquelle, à la fois sur ses première et seconde extrémités, présente un moyen pour 1) souder, un moyen pour 2) créer la fente, un moyen pour 3) comprimer un bord latéral d'une feuille dans la fente, un moyen pour 4) remplir la fente avec du sol et un moyen optionnel pour 5) comprimer le sol dans la fente.

11. Machine agricole (1) appropriée pour exécuter un procédé selon l'une quelconque des revendications 1 à 10, la machine présentant une largeur opérationnelle (50) s'étendant entre une première extrémité (51) et une seconde extrémité (52), la largeur opérationnelle correspondant à la largeur d'une feuille, la machine comprenant :
- un transporteur pour transporter les feuilles (31, 310) présentes dans un paquet (30),
- des moyens (21, 22, 23) pour dérouler la feuille du paquet et alimenter la feuille pour couvrir la terre (200),
- à la première extrémité de la machine, un moyen pour créer une fente (201) dans le sol, un moyen (12) pour pelleter du sol (202) au-dessus de la feuille dans la fente, et en option en amont du moyen pour pelleter du sol, un élément de compression (14) pour comprimer le sol pelleté au-dessus de la feuille dans la fente, et
- sur les première ou seconde extrémités de la machine, un moyen de soudage (15, 16) pour relier la feuille à une autre.

12. Combinaison d'une première et d'une seconde machine, appropriées ensemble pour exécuter un procédé selon l'une quelconque des revendications 1 à 10, dans lequel :
- la première machine présente une largeur opérationnelle s'étendant entre une première extrémité et une seconde extrémité, la largeur opérationnelle correspondant à la largeur d'une première feuille, la première machine comprenant un transporteur pour transporter la première feuille présente dans un paquet, des moyens pour dérouler la première feuille du paquet et alimenter la première feuille pour couvrir la terre, et à ses première et seconde extrémités, un moyen pour créer une fente dans la terre, un moyen pour pelleter du sol au-dessus de la feuille dans la fente, et en option en amont du moyen pour pelleter du sol, un élément de compression pour comprimer le sol pelleté au-dessus de la feuille dans la fente, et
- la seconde machine présente une largeur opérationnelle s'étendant entre une première extrémité et une seconde extrémité, la largeur opérationnelle correspondant à la largeur d'une seconde feuille, la deuxième machine comprenant un transporteur pour transporter la seconde feuille présente dans un paquet, des moyens pour dérouler la seconde feuille du paquet et alimenter la seconde feuille pour couvrir la terre, et à ses première et seconde extrémités, un moyen de soudage pour relier la première feuille à la seconde feuille.

13. Machine selon la revendication 11 ou la première machine selon la revendication 12, dans laquelle le moyen pour créer une fente comprend une charrue (10) pour creuser la fente, et la machine est dotée d'un moyen (11) positionné en amont de la charrue pour forcer une partie de la feuille dans la fente, et le moyen pour pelleter du sol au-dessus de la feuille comprend une pelle positionnée en amont du moyen pour forcer une partie de la feuille dans la fente.

14. Machine selon la revendication 13, **caractérisée en ce que** la machine présente un élément de retenue (13) adjacent à la pelle pour permettre de réduire au minimum la quantité de sol jetée au-dessus de la feuille lorsque du sol est pelleté sur le dessus de la feuille.

15. Machine selon l'une quelconque des revendications 11 à 14, **caractérisée en ce que** le moyen de soudage comprend un moyen pour appliquer de la colle (150, 150') sur un bord latéral d'une feuille.
